# EUROPÄISCHE PATENTSCHRIFT

(11) **EP 2 363 286 B1**
(45) Veröffentlichungstag und Bekanntmachung des Hinweises auf die Patenterteilung: **15.01.2014**
(21) Anmeldenummer: 10155018.4
(22) Anmeldetag: 01.03.2010
(51) Int. Cl.: B32B 27/00, B23K 26/40, B29C 53/06, B65D 75/58

(54) **Verpackungsfolie, Verpackung und Herstellungsverfahren für diese Verpackung**
Packaging film, packaging and production method for this packaging
Feuille d'emballage, emballage et procédé de fabrication pour cet emballage

(43) Veröffentlichungstag der Anmeldung: 07.09.2011
(73) Patentinhaber: Mondi AG, 1032 Wien (AT)
(72) Erfinder: Madai, Gyula, H-1039, Budapest (HU)
(74) Vertreter: Schneider, Michael

(56) Entgegenhaltungen:
- DE-U1-202009 000 302

## Beschreibung

### TECHNISCHES FELD

Die Erfindung betrifft eine Verpackungsfolie.

Die Erfindung betrifft weiterhin ein Herstellungsverfahren für eine Verpackung unter Verwendung der Verpackungsfolie gemäß dem ersten Absatz.

Die Erfindung betrifft weiterhin eine aus einer Verpackungsfolie gemäß dem ersten Absatz hergestellte Verpackung.

### HINTERGRUND

Eine Verpackungsfolie der eingangs im ersten Absatz angeführten Gattung ist beispielsweise aus der europäischen Patentanmeldung EP0473517A2 bekannt. In die Verpackungsfolie werden mit Hilfe von Laserstrahlen linienförmige Materialschwächungen eingebracht, die einen Öffnungsstreifen begrenzen, der durch Krafteinwirkung durch einen Benutzer aus dem Verbund der Verpackungsfolie herausgerissen werden kann. Die Verpackungsfolie weist weiters randseitige Siegelbereiche auf, die zum Versschließen der Verpackung dienen. Bei der rollenförmigen Verarbeitung der Verpackungsfolie wird von einer Rolle, auf welcher die Verpackungsfolie aufgewickelt ist, die Verpackungsfolie abgewickelt und die Verpackungsfolie um ein Produkt gefaltet. Dabei werden innenseitige Randbereich - nämlich die Siegelbereiche - der Verpackungsfolie aneinandergedrückt und versiegelt.

Bei der bekannten Verpackungsfolie besteht das Problem, dass bei Materialsschwächungen, die sich z. B. quer zur Abrollrichtung der Verpackungsfolie erstrecken, die geforderte Stabilität der Verpackungsfolie für die rollenförmige Verarbeitung nur schwierig bis gar nicht zu realisieren ist, und zwar insbesondere dann, wenn es sich um relativ dünne Folien handelt. Zudem haben sich bekannte Aufreißlaschen, die im Verbund mit dem Öffnungsstreifen vorgesehen sind, um den Öffnungsstreifen aus der Verpackungsfolie zu lösen, als problematisch erwiesen. Solche Aufreißlaschen, oft auch als Öffnungsinitiierungsmittel bezeichnet, stehen meist von der Verpackung ab oder sind in einer sehr exponierten Position an einem oder zwei der überlappenden Ränder der Verpackungsfolie in die Verpackungsfolie integriert. Die abstehende bzw. Exponierte Lage der Öffnungsinitiierungsmittel birgt das Risiko einer ungewollten Öffnungsinitiierung mit sich. Insbesondere die am Rande der Verpackungsfolie integrierten Öffnungsinitiierungsmittel haben einen ähnlich negativen Effekt auf die Stabilität der Verpackungsfolie, wie dies im Fall der den Öffnungsstreifen begrenzenden Materialschwächungen der Fall ist, wenn diese Materialschwächungen bis an den Rand der Verpackungsfolie reichen.

Aus der DE 20 2009 000 302 U1 ist eine Verpackungsfolie und eine Verpackung bekannt, bei der eine linienartige Aufreißhilfe zum Einsatz kommt, die drei zueinander beabstandete Schwächungslinien umfasst. Die beiden äußeren Schwächungslinien beginnen in einem Abstand zu einer seitlichen Kante der Frontseite der Verpackung und die mittlere zwischen den beiden äußeren gelegene Schwächungslinie beginnt unmittelbar an der seitlicher, Kante den Frontseite. Durch diese Aufreißhilfe wird erreicht, dass ein sich zunächst beginnend an der mittleren Schwächungslinie ausbreitender und von dieser abweichender Riss entlang einer der beiden äußeren_Schwächungslinien weiter geführt wird, sobald er diese erreicht. Die äußeren Schwächungslinien haben also die Funktion einer Sicherheitsschwächungslinie zum Vermeiden von unkontrollierter Rissausbreitung.

Aufgabe der Erfindung ist es daher, eine Verpackungsfolie, ein Herstellungsverfahren für eine Verpackung, sowie eine unter Verwendung der Verpackungsfolie gefertigte Verpackung bereitzustellen, sodass die vorstehend angeführten Probleme vermieden sind.

### ZUSAMMENFASSUNG DER ERFINDUNG

Diese Aufgabe wird zum einen durch eine Verpackungsfolie gemäß Anspruch 1 und zum anderen durch ein Verfahren zur Herstellung einer Verpackung gemäß Anspruch 10 und durch eine Verpackung gemäß Anspruch 14 gelöst.

Der Gegenstand der Erfindung ist daher eine Verpackungsfolie zum Herstellen einer Verpackung, wobei die Verpackungsfolie einen ersten Rand und einen zweiten Rand in Längsrichtung aufweist, und eine erste Materialschwächungszone und eine zweite Materialschwächungszone aufweist, die sich zwischen dem ersten Rand und dem zweiten Rand erstrecken und zwischen ihnen einen Öffnungsstreifen begrenzen, wobei die Materialschwächungszonen in einem Abstand zu den Rändern enden, und einen ersten Siegelbereich benachbart zu dem ersten Rand und einen zweiten Siegelbereich benachbart zu dem zweiten Rand aufweist, wobei die Siegelbereiche auf jener als Innenseite der Verpackung bestimmten Seite der Verpackungsfolie lokalisiert sind und sich die Materialschwächungszonen bis in die Siegelbereiche erstrecken, und Öffnungsinitiierungsmittel aufweist, die in einer Entfernung von zumindest einem der Ränder angeordnet sind, wobei ein Randbereich zwischen dem jeweiligen Rand und den Öffnungsinitiierungsmitteln frei von diesen Öffnungsinitiierungsmitteln ist.

Zudem ist der Gegenstand der Erfindung ein Verfahren zur Herstellung einer Verpackung unter Verwendung einer erfindungsgemäßen Verpackungsfolie mit folgenden Verfahrensschritten: Abrollen und bahnförmiges Zuführen der Verpackungsfolie, und Erzeugen einer Längsfinne durch Schlauchbilden der Verpackungsfolie und Versiegeln der Verpackungsfolie entlang der Ränder in den Siegelbereichen, wobei die in einer Entfernung zu einem der Ränder angeordneten Öffnungsinitiierungsmittel trotz der Existenz des Randbereiches zwischen dem jeweiligen Rand und den Öffnungsinitiierungsmitteln, welcher Randbereich frei von diesen Öffnungsinitiierungsmitteln ist, frei handhabbar in der Längsfinne zugänglich sind.

Eine derart hergestellte Längsfinne wird im Fachjargon auch als Längs-Umlegenaht bzw. Längs-Umlege-Siegelnaht bezeichnet, weil sie nach ihrer Erzeugung an die Verpackung umgelegt und an die Verpackung angeschmiegt wird.

Weiterhin ist der Gegenstand der Erfindung eine Verpackung, die nach dem erfindungsgemäßen Verfahren unter Verwendung der erfindungsgemäßen Verpackungsfolie hergestellt wurde.

Durch die erfindungsgemäßen Maßnahmen ist auf vorteilhafte Weise erreicht, dass bei einem rollenförmigen Handhaben der Verpackungsfolie keine Stabilitätsprobleme mehr auftreten, weil die Randbereiche der Verpackungsfolie einerseits frei von Materialschwächungszonen und andererseits auch frei von Öffnungsinitiierungsmitteln sind. Zudem bietet die Verpackungsfolie den Vorteil, dass alle Funktionen zum Öffnen der Verpackung vollständig in der Verpackungsfolie integriert sind. Dies bedeutet, dass an bestehenden Verpackungsmaschinen keinerlei Änderungen vorzunehmen sind und diese Maschinen trotz der vollständigen Integration der Funktionen zum Öffnen der Verpackung mit voller Geschwindigkeit betrieben werden können. Die erfindungsgemäße Integration der Funktion zum Öffnen der Verpackung beabstandet von den Rändern unter Freilassung eines Randbereiches sorgt für die geforderte Stabilität der Verpackungsfolie bei der maschinellen Herstellung der Verpackung, sodass die Gefahr des Einreißens bei der rollenförmigen Verarbeitung einer Bahn der Verpackungsfolie vermieden ist.

Es kann eine beliebige, den jeweiligen Anforderungen entsprechende Anzahl von Öffnungsstreifen vorgesehen sein. Auch die Orientierung des Öffnungsstreifens kann von einer Orientierung normal zu den Rändern der Verpackungsfolie abweichen. Letztendlich kann auch Ihre Form sich entlang der Länge des Öffnungsstreifens ändern. Die Öffnungsinitiierungsmittel sind so ausgerichtet und positioniert, dass sie mit den Materialschwächungen zusammenwirken, wenn eine Zug- oder Druckkraft bevorzugt aus der Ebene der Verpackungsfolie heraus auf sie ausgeübt wird. Dann bewirken Sie eine Krafteinleitung in den Öffnungsstreifen, sodass sich entlang der Materialschwächungszonen, die als Sollbruchstelle bzw. -zone wirken, ein Riss bildet und der Öffnungsstreifen aus der Verpackungsfolie herausgelöst werden kann.

Die Materialschwächungszonen können flächig oder linienförmig ausgebildet sein. Sie können z.B. durch einen Prägevorgang erzeugt werden, bei dem die Verpackungsfolie nicht vollständig durchdrungen wird, um ihre Dichtheit zu gewährleisten. Bevorzugt werden sie jedoch durch die Anwendung eines Laserstrahls erzeugt. Sie können an jener als Außenseite der Verpackung dienenden Seite der Verpackungsfolie erzeugt werden. Bevorzugt sind die sie jedoch an jener als Innenseite der Verpackung dienenden Seite der Verpackungsfolie erzeugt, weil sie dann von außen an der Verpackung nicht sichtbar sind.

Die Siegelzonen können beispielsweise mit einer peelfähigen Beschichtung beschichtet sein. Eine solche Beschichtung kann z.B. durch ein siegelfähiges Medium wie beispielsweise einen Kaltsiegelklebstoff gegeben sein. Diese Lösung ist dann von Vorteil wenn hitzeempfindliche Lebensmittel, wie z.B. Schokolade mit der Verpackung verpackt werden sollen. Dabei kann die Beschichtung an beiden Siegelzonen oder nur an einer der Siegelzonen vorgenommen werden.

Die Siegelzonen können jedoch ihre Peelfähigkeit auch durch die innere Schicht der Verpackungsfolie selbst erhalten, wenn z.B. peelfähige Polymere dafür verwendet werden. In diesem Fall werden die inneren Schichten der Verpackungsfolie miteinander heiß versiegelt. Diese Lösung ist dann möglich, wenn auf eine mögliche Erwärmung des zu verpackenden Produktes während des Siegelvorgangs keine oder kaum Rücksicht genommen werden muss.

Die Siegelzonen verlaufen im Wesentlichen in Längsrichtung unmittelbar benachbart zu den Rändern oder mittelbar benachbart zu den Rändern in einem Abstand zu den Rändern.

Der Abstand zwischen den Rändern und den Enden der Materialschwächungszonen kann beispielsweise für beide Ränder gleich groß sein. Gemäß einem bevorzugten Ausführungsbeispiel ist jedoch ein erster Abstand zwischen dem ersten Rand, bei dem die Materialschwächungszonen einerseits enden, größer als ein zweiter Abstand zwischen dem zweiten Rand, bei dem die Materialschwächungszonen andererseits enden. Diese Asymmetrie der Abstände ermöglicht eine einfache Faltung der Verpackungsfolie zwecks Schlauchbildung, wobei die Ränder im Wesentlichen deckungsgleich angeordnet werden können, und sich z.B. Öffnungsinitiierungsmittel auf einfache Weise symmetrisch in Bezug auf die Rändern anordnen lassen.

Die Öffnungsinitiierungsmittel können beispielsweise durch eine auf den Öffnungsstreifen aufgeklebte bzw. mit ihm zusammengeschweißte Öffnungslasche gebildet sein. Eine solche Konstruktion ist jedoch relativ aufwändig und daher nachteilig. Als besonders vorteilhaft hat es sich erwiesen, wenn die Öffnungsinitiierungsmittel einen ersten Schlitz aufweisen, der an einer Position korrespondierend zu einem Zwischenraum zwischen den Materialschwächungen ausgebildet ist, wobei dieser erste Schlitz benachbart zu dem zweiten Rand mit einer Entfernung von dem zweiten Rand gemäß dem zweiten Abstand lokalisiert ist. Die derart positionierten Öffnungsinitiierungsmittel erlauben ein direktes Aufreißen des Öffnungsstreifens an jenem Ende des Öffnungsstreifens, das benachbart zu dem zweiten Rand vorliegt. Ein Benutzer der Verpackung kann z.B. in den ersten Schlitz mit seinem Fingernagel eingreifen und die erforderliche Zugkraft aufbringen, um ein herauslösen des Öffnungsstreifens zu starten.

Die Form der Öffnungsinitiierungsmittel ist bevorzugt durch einen ersten Schlitz gegeben, wobei die Erzeugung dieses ersten Schlitzes beispielsweise durch ein Einschneiden mit einem Messer, durch ein Ausstanzen eines Materialstreifens oder durch ein Einschneiden mit Hilfe eines Lasers erfolgen kann. Die Verwendung des Lasers ist dann von Vorteil, wenn dieser Laser bereist für andere Bearbeitungsschritte an der Verpackungsfolie verwendet wird. Die Breite des ersten Schlitzes kann dabei möglichst klein gehalten werden, um ein ungewolltes oder versehentliches Initiieren des Öffnens zu vermeiden. In einer anderen Ausführungsform kann die Breite des Schlitzes jedoch auch eine erhebliche Breite aufweisen, was mitunter das Zugreifen auf den Schlitz erleichtern kann.

Die Verpackungsfolie kann nur einseitig benachbart zu dem zweiten Rand ausgebildete Öffnungsinitiierungsmittel aufweisen.

Die Öffnungsinitiierungsmittel können jedoch auch beidseitig benachbart zu den beiden Rändern ausgebildet sein. In diesem Fall weisen die Öffnungsinitiierungsmittel auf vorteilhafte Weise zusätzlich zu besagtem ersten Schlitz einen weiteren ersten Schlitz auf, der benachbart zu dem ersten Rand mit einer dem zweiten Abstand entsprechenden Entfernung von dem ersten Rand lokalisiert ist. Diese geometrischen Verhältnisse sind dann vorteilhaft, wenn die Ränder der Verpackungsfolie deckungsgleich in einer Längsfinne der Verpackung lokalisiert sein sollen. Soll jedoch ein Unterschied in der Position der beiden Ränder vorliegen, so muss auch die Position der beidseitig ausgebildeten Öffnungsinitiierungsmittel entsprechend besagtem Unterschied in der Position der Ränder angepasst werden, um eine deckungsgleiche Positionierung der Öffnungsinitiierungsmittel in der Längsfinne zu erhalten.

Unabhängig davon, ob die Öffnungsinitiierungsmittel einseitig oder beidseitig ausgebildet sind, können sie grundsätzlich ausschließlich durch besagten ersten Schlitz realisiert sein. Gemäß einem bevorzugten Ausführungsbeispiel weisen die Öffnungsinitiierungsmittel jedoch auch einen zweiten Schlitz und einen dritten Schlitz auf, wobei der erste Schlitz mit dem zweiten Schlitz und dem dritten Schlitz verbunden ist und sich der zweite Schlitz von dem ersten Schlitz weg in Richtung der ersten Materialschwächungszone erstreckt und sich der dritte Schlitz von dem ersten Schlitz weg in Richtung der zweiten Materialschwächungszone erstreckt. Bei dieser vorteilhaften Ausgestaltung der Öffnungsinitiierungsmittel bilden die drei Schlitze innerhalb der Ränder der Verpackungsfolie - also beabstandet mit einem Randbereich, der frei von den Öffnungsinitiierungsmitteln ist - eine Lasche, welche einen relativ einfachen Zugriff auf den Öffnungsstreifen ermöglicht. Die Lasche kann beispielsweise durch den Finger eines Benutzers möglichst einfach aus der Ebene der Verpackungsfolie herausgedrückt werden und auf der Seite der Verpackungsfolie, aus der die Lasche aus der Verpackungsfolie herausgedrückt wird, z.B. mit zwei Fingern gegriffen werden. Durch ein Anreißen an der Lasche lässt sich der Öffnungsstreifen entlang der Materialschwächungszonen aus dem Verbund der Verpackungsfolie herauslösen.

Auch im Falle heißsiegelnder Beschichtungen soll die Breite der Schlitze der Öffnungsinitiierungsmittel groß genug sein um einen nicht beabsichtigten Verschluss des jeweiligen Schlitzes durch die Schmelze der Siegelschicht in der Längsfinne vermeiden zu können, wenn z.B. die Ränder der Verpackungsfolie deckungsgleich in der Längsfinne der Verpackung lokalisiert und wenn die Öffnungsinitiierungsmittel beidseitig ausgebildet und deckungsgleich positioniert sind.

Jener Randbereich, der frei von den Öffnungsinitiierungsmitteln ist, weist einen Abrissbereich auf. Der Abrissbereich kann nach Belieben von einem Benutzer von der Folie abgerissen werden, so dass der Zugriff auf die Öffnungsinitiierungsmittel erleichtert ist.

Wenn die Öffnungsinitiierungsmittel benachbart zu beiden Rändern der Verpackungsfolie vorgesehen sind, hat es sich als vorteilhaft erwiesen, dass ein Separierungsschlitz ausgebildet ist, der zwischen den Materialschwächungszonen entlang des ersten Randes in einem Abstand gemessen von dem ersten Rand, der größer oder gleich dem ersten Abstand ist, innerhalb des ersten Siegelbereichs verläuft. Dieser Separierungsschlitz ermöglicht, dass miteinander versiegelte Bereiche der Verpackungsfolie bei einem Aufreißen der Verpackungsfolie mit Hilfe der Öffnungsinitiierungsmittel voneinander abgeschält werden können, und zwar beginnend an der Position des Separierungsschlitzes. Bei einem Anreißen an den Öffnungsinitiierungsmitteln bildet sich zunächst ein Bruch in der Verpackungsfolie entlang der Materialschwächungszonen in beiden miteinander versiegelten Lagen der Verpackungsfolie. Dieser Bruch erreicht schließlich den Separierungsschlitz. Ab dem Separierungsschlitz setzt sich der Bruch in der Verpackungsfolie nicht in den beiden aneinander gesiegelten Lagen der Verpackungsfolie fort. Vielmehr setzt sich der Bruch nur noch in jenem Teil der Verpackungsfolie fort, der nicht den Separierungsschlitz aufweist. Es wird also dieser nicht den Separierungsschlitz aufweisende Teil von dem anderen Teil, mit dem er versiegelt ist, abgeschält. Erst nachdem der Öffnungsstreifen entlang der Verpackungsfolie rund um die Verpackung herausgetrennt wurde, wird an seinem Ende wieder der Separierungsschlitz erreicht und ggf. auch der noch in der Siegelzone verbliebene andere Teil der Verpackungsfolie von der Verpackungsfolie durch vollständiges Entfernen des Öffnungsstreifens abgetrennt.

Die Formgröße und Ausgestaltung des Separierungsschlitzes kann je nach Anforderungsprofil variieren, was einerseits die Breite des Separierungsschlitzes und andererseits die Länge des Separierungsschlitzes betrifft. Um ein zuverlässiges Abschälen der beiden miteinander versiegelten Teile der Verpackungsfolie zu ermöglichen, hat es sich als vorteilhaft erwiesen, wenn der Separierungsschlitz bis über die Materialschwächungszonen oder anders ausgedrückt über die Breite des Öffnungsstreifens hinaus reicht, also länger als der Abstand zwischen den Materialschwächungszonen ist. Auch dieser Separierungsschlitz kann beispielsweise durch ein Einschneiden mit einem Messer, durch ein Ausstanzen eines Materialteiles oder durch ein Einschneiden mit Hilfe eines Laserstrahls erzeugt werden. Insbesondere dann, wenn die Materialschwächungszonen mit Hilfe eines Lasers erzeugt werden, hat es sich als vorteilhaft erwiesen, auch diesen Laser für die Erzeugung des Separierungsschlitzes zu verwenden.

Als besonders vorteilhaft hat es sich erwiesen, wenn zwischen dem weiteren ersten Schlitz und dem Separierungsschlitz eine dritte Materialschwächungszone und eine vierte Materialschwächungszone ausgebildet ist, wobei die dritte Materialschwächungszone zwischen der ersten Materialschwächungszone und dem einen Endbereich des weiteren ersten Schlitzes und die vierte Materialschwächungszone zwischen dem anderen Endbereich des weiteren ersten Schlitzes verläuft. Die dritten und vierten Materialschwächungszonen sind nicht als Schnitte oder Ausstanzungen ausgebildet, weil sonst die so gebildete Lasche bei der Produktion der Verpackungsfolie aus der Verpackungsfolie herausfallen würde, wenn die dritte und vierte Materialschwächungszone an dem Separierungsschlitz enden würde. Die Art und Ausgestaltung der dritten und vierten Materialschwächungszone kann gleich wie die erste und zweite Materialschwächungszone oder dem zu erzielenden Reißvorgang entsprechend angepasst sein. Bevorzugt handelt es sich daher um eine Prägung, ein Ritzen oder um eine Perforation der Verpackungsfolie. Eine Perforation ist deshalb möglich, weil in den Siegelbereichen keine Dichtheit gefordert ist. Die dritte und die vierte Materialschwächungszonen definieren die Einreißrichtung in der Siegelzone ausgehend von der Lasche hin zu dem Separierungsschlitz und vermeiden eine unkontrollierte Ausbreitung eines Risses in dem Siegelbereich.

Wie eingangs angeführt ist es bei dem Verfahren zur Herstellung einer Verpackung unter Verwendung einer erfindungsgemäßen Verpackungsfolie von Vorteil, wenn die in einer Entfernung zu einem der Ränder angeordneten Öffnungsinitiierungsmittel trotz der Existenz des Randbereiches zwischen dem jeweiligen Rand und den Öffnungsinitiierungsmitteln, welcher Randbereich frei von diesen Öffnungsinitiierungsmitteln ist, frei handhabbar in der Längsfinne ausgebildet ist. Nur wenn die Öffnungsinitiierungsmittel frei handhabbar in der Längsfinne ausgebildet sind, können diese auch ihre Wirkung zum Initiieren des Öffnens des Öffnungsstreifens entfalten.

Bei dem Erzeugen der Längsfinne sind gemäß der jeweiligen Ausbildung der Verpackungsfolie zwei unterschiedliche Verfahrensabläufe möglich.

Bei einer ersten Ausbildungsform sind die Öffnungsinitiierungsmittel nur einseitig benachbart zu einem der Ränder ausgebildet. Gemäß dieser Ausbildungsform wird bei dem Erzeugen der Längsfinne derjenige Rand, an dem Öffnungsinitiierungsmittel ausgebildet sind und der andere Rand so ausgerichtet, dass derjenige Rand, an dem die Öffnungsinitiierungsmittel ausgebildet sind, den anderen Rand in der Längsfinne soweit überragt, dass die Öffnungsinitiierungsmittel oberhalb des anderen Rands lokalisiert sind. Die Öffnungsinitiierungsmittel werden in der Längsfinne dann nicht durch einen öffnungsinitiierungsmittelfreien Bereich der Verpackungsfolie abgedeckt, da dieser unterhalb der Öffnungsinitiierungsmittel in der Längsfinne endet. Dadurch ist ihre freie Handhabbarkeit gegeben.

Gemäß einer zweiten Ausbildungsform der Verpackungsfolie sind die Öffnungsinitiierungsmittel beidseitig benachbart zu beiden Ränder der Verpackungsfolie ausgebildet. Bei dem Erzeugen der Längsfinne werden die beiden Ränder so ausgerichtet, dass die beidseitig ausgebildeten Öffnungsinitiierungsmittel deckungsgleich in der Längsfinne realisiert sind. Auch in diesem Fall ist sichergestellt, dass die benachbart zu einem der Ränder ausgebildeten Öffnungsinitiierungsmittel nicht versehentlich durch einen öffnungsinitiierungsmittelfreien Bereich der Verpackungsfolie abgedeckt sind bzw. mit ihm versiegelt sind. Dadurch ist ihre freie Handhabbarkeit gewährleistet.

Eine derart erzeugte schlauchförmige Verpackungsstruktur wird letztendlich an einer Kopf- bzw. an einer Fußseite bzw. links- und rechtsseitig der zu erzeugenden Verpackung versiegelt und von der Verpackungsfolie abgetrennt.

Die Kunststofffolie kann grundsätzlich durch ein Monomaterial gebildet sein. Gemäß einem bevorzugten Ausführungsbeispiel ist die Kunststofffolie jedoch durch ein Verbundmaterial realisiert, welches beispielsweise durch Extrusionskaschieren oder Klebstoffkaschieren hergestellt wurde. Das Verbundmaterial kann mehrere Schichten Kunststoff oder eine Kombination von Kunststoffschichten mit metallischen Schichten oder auch Papierschichten usw. aufweisen. Üblicherweise weist das Verbundmaterial an der Außenfolienseite ein nicht siegelfähiges Material auf, welches gemäß Kundenvorgaben bedruckt wird. In einem solchen Anwendungsfall hat es sich auch als vorteilhaft erwiesen, wenn die Innenseite der Verpackungsfolie metallisiert ist. Als Materialien für die Kunststoffschicht der Verpackungsfolie können beispielsweise und nicht abschließend aufgezählt Polyester (PET), Polyethylen (PE), Polypropylen (PP), Polyamid (PA) zum Einsatz kommen. Bei einer Verbundmaterialrealisierung kann ein schichtartiger Verbund bzw. eine Kombination der vorstehend angeführten Materialien zum Einsatz kommen. Neben den bereits erwähnten Beschichtungen bzw. Zwischenschichten können für diesen Zweck auch Papierschichten oder weitere Metallschichten oder auch Kombinationen dieser Schichten zur Anwendung kommen. Die Kaschierkleber können beliebige in der Praxis bekannten Materialien sein. Alle in der Praxis bekannten peelfähigen Beschichtungen (Polymere, Kaltsiegelkleber oder Selbstklebematerialien) können verwendet werden, deren Peelkraft 3 N/15 mm nicht übersteigt.

### FIGURENKURZBESCHREIBUNG

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugsziffern versehen. Es zeigen auf schematische Weise:
- Fig. 1: eine Ansicht der Innenseite eines ersten Ausführungsbeispiels einer erfindungsgemäßen Verpackungsfolie;
- Fig. 2: eine Ansicht der Außenseite der Verpackungsfolie gemäß der Fig. 1;
- Fig. 3: eine Konzeptdarstellung einer Finnenbildung mit der Verpackungsfolie gemäß der Fig. 2 mit nach links umgelegter Finne;
- Fig. 4: die Konzeptdarstellung gemäß der Fig. 3 mit nach rechts umgelegter Finne;
- Fig. 5: ein gemäß der Konzeptdarstellung nach Fig. 3 und 4 gefertigte erfindungsgemäße Verpackung in einer ersten Perspektive;
- Fig. 6: die Verpackung gemäß der Fig. 5 in einer zweiten Perspektive;
- Fig. 7: die Verpackung gemäß der Fig. 5 in einer weiteren Perspektive;
- Fig. 8: eine Ansicht der Innenseite eines zweiten Ausführungsbeispiels einer erfindungsgemäßen Verpackungsfolie;
- Fig. 9: eine Ansicht der Außenseite der Verpackungsfolie gemäß der Fig. 8;
- Fig. 10: eine unter Verwendung der Verpackungsfolie nach Fig. 8 und 9 gefertigte erfindungsgemäße Verpackung in einer ersten Perspektive; und
- Fig. 11: die Verpackung gemäß der Fig. 10 in einer zweiten Perspektive.

### BESCHREIBUNG DER AUSFÜHRUNGSBEISPIELE

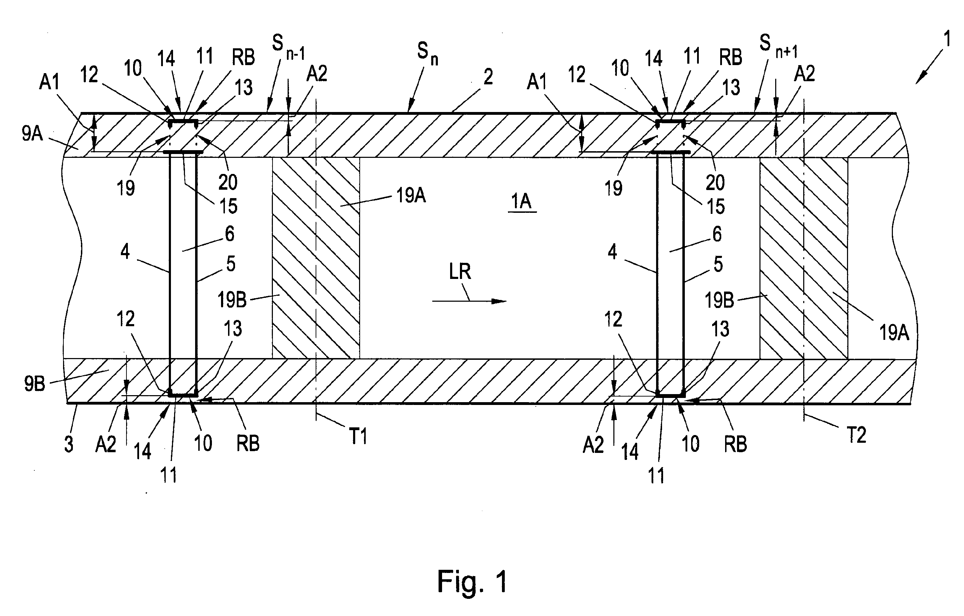

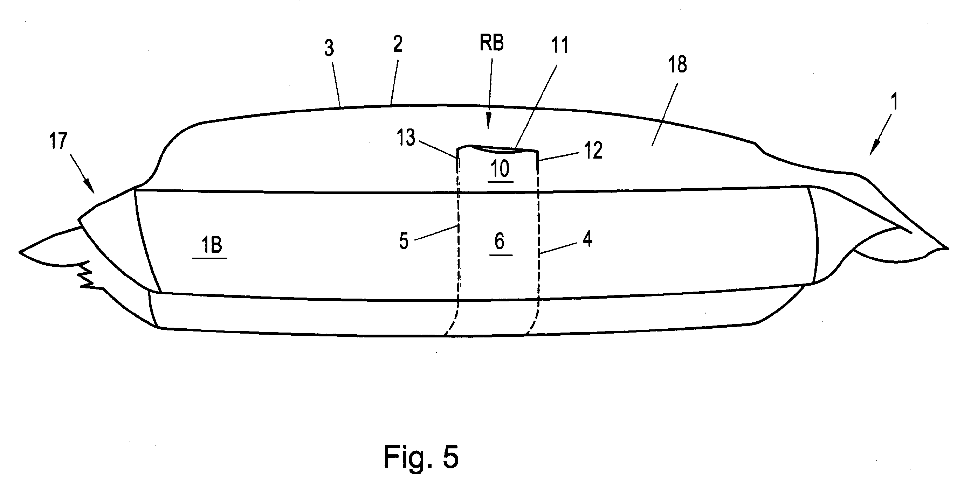

In der Fig. 1 ist eine erfindungsgemäße Verpackungsfolie 1 zum Herstellen mehrer Verpackungen 17 (siehe Fig. 5 bis 7) dargestellt. Jedes Segment Sₙ₋₁, Sₙ und Sₙ₊₁ ist identisch ausgebildet. Die Grenzen der Segmente Sₙ₋₁, Sₙ und Sₙ₊₁ sind durch gedachte Tennlinien T1 und T2 angedeutet, an denen die Verpackungsfolie 1 bei der Herstellung der Verpackungen 17 durch einen Scheidevorgang segmentiert wird. Die Verpackungsfolie 1 weist einen ersten Rand 2 und einen zweiten Rand 3 in Längsrichtung LR (angedeutet durch einen Pfeil) auf. Die eben ausgebreitete Verpackungsfolie 1 wurde zuvor von einer Rolle (nicht dargestellt) abgewickelt.

Die Verpackungsfolie 1 weist weiters eine erste Materialschwächungszone 4 und eine zweite Materialschwächungszone 5 auf. Die beiden Materialschwächungszonen 4 und 5 erstrecken sich zwischen dem ersten Rand 2 und dem zweiten Rand 3 in Querrichtung zu der Längsrichtung LR der Verpackungsfolie 1. Zwischen ihnen ist ein Öffnungsstreifen 6 begrenzt. Die Materialschwächungszonen 4 und 5 enden einerseits in einem ersten Abstand A1 zu dem ersten Rand 2. Die Materialschwächungszonen 4 und 5 enden andererseits in einem zweiten Abstand A2 zu dem zweiten Rand 3. Der erste Abstand A1 ist größer als der zweite Abstand A2.

Die Verpackungsfolie 1 weist weiters zwei in Längsrichtung LR orientierte Siegelbereiche 9A und 9B auf, die benachbart zu dem ersten Rand 2 bzw. dem zweiten Rand 3 lokalisiert sind. Wie in der Fig. 1 dargestellt, sind die Siegelbereiche 9A und 9B auf einer als Innenseite 1A der Verpackung 17 bestimmten Seite der Verpackungsfolie 1 realisiert. Die Materialschwächungszonen 4 und 5 reichen bis in die Siegelbereiche 9A und 9B hinein. Quer zu den längsorientierten Sigelbereichen 9A und 9B verlaufen Quersiegelbereiche 19A und 19B, die zum links- und rechtsseitigen Verschließen der Verpackung 17 dienen.

Die Verpackungsfolie 1 weist weiters Öffnungsinitiierungsmittel 10 auf, die jeweils in einer Entfernung zu einem der Ränder 2 bzw. 3 angeordnet sind, wobei ein Randbereich RB zwischen dem jeweiligen Rand 2 bzw. 3 und den Öffnungsinitiierungsmitteln 10 frei von diesen Öffnungsinitiierungsmitteln 10 ist. Bei der erfindungsgemäßen Verpackungsfolie sind demnach weder die Materialschwächungszonen 4 und 5 noch die Öffnungsinitiierungsmittel 10 bis an den jeweiligen Rand 2 bzw. 3 herausgeführt. Die erfindungsgemäße Verpackungsfolie 1 weist also randseitig jeweils einen Materialstreifen auf, in dem keinerlei Schwächung des Verbundes der Verpackungsfolie 1 vorliegt. Dieser Materialstreifen ist also schwächungsfrei ausgebildet. Dies erhöht die Stabilität der Verpackungsfolie 1 erheblich und macht sie insbesondere für rollenförmige Handhabung geeignet, bei der die Verpackungsfolie mit relativ hoher Geschwindigkeit von einer Rolle abgewickelt und einer weiteren Verarbeitung zugeführt wird.

Die Öffnungsinitiierungsmittel 10 weisen einen ersten Schlitz 11 auf, der an einer Position korrespondierend zu dem Zwischenraum zwischen den Materialschwächungszonen 4 und 5 ausgebildet ist. Im vorliegenden Fall ist der erste Schlitz 11 benachbart zu dem zweiten Rand 3 mit einer Entfernung von dem zweiten Rand 3 gemäß dem zweiten Abstand A2 lokalisiert. Der erste Schlitz 11 verläuft parallel zu dem zweiten Rand 3. Symmetrisch zur Längsachse der Verpackungsfolie 1 dazu ist auch parallel zu dem ersten Rand 2 ein weiterer erster Schlitz 11 vorgesehen. Dieser weitere erste Schlitz 11 ist zwischen dem ersten Rand 2 und dem Ende der Materialschwächungszonen 4 und 5 lokalisiert.

Die Öffnungsinitiierungsmittel 10 weisen weiters einen zweiten Schlitz 12 und einen dritten Schlitz 13 auf. Der erste Schlitz 11 ist weiters mit dem zweiten Schlitz 12 und dem dritten Schlitz 13 verbunden. Der zweite Schlitz 12 erstreckt sich von dem ersten Schlitz 11 weg in Richtung der ersten Materialschwächungszone 4. Der dritte Schlitz 13 erstreckt sich von dem ersten Schlitz 11 weg in Richtung der zweiten Materialschwächungszone 5.

Im Fall der zu dem zweiten Rand 3 benachbart angeordneten Öffnungsinitiierungsmittel 10 mündet der zweite Schlitz 12 in die erste Materialschwächungszone 4 und der dritte Schlitz 13 in die zweite Materialschwächungszone 5. Im Fall der zu dem ersten Rand 2 benachbart angeordneten Öffnungsinitiierungsmittel 10 mündet der zweite Schlitz 12 nicht direkt in die erste Materialschwächungszone 4 und der dritte Schlitz 13 nicht direkt in die zweite Materialschwächungszone 5.

Die Öffnungsinitiierungsmittel 10 sind beidseitig benachbart zu den beiden Rändern 2 und 3 der Verpackungsfolie 1 identisch dimensioniert ausgebildet. Die Länge des ersten Schlitzes 11 entspricht dabei im Wesentlichen dem Abstand der beiden Materialschwächungszonen 4 und 5 voneinander. Die Länge des zweiten Schlitzes 12 und des dritten Schlitzes 13 ist so bemessen, dass sie an dem ersten Rand nicht bis in die Materialschwächungszonen 4 und 5 hineinreichen. Jener Randbereich RB der Verpackungsfolie 1, der benachbart zu den Öffnungsinitiierungsmitteln 10 und zwischen den Öffnungsinitiierungsmitteln 10 und dem jeweiligen Rand 2 und 3 gelegen ist, hat die Funktion eines Abrissbereiches 14. Darauf wird nachfolgend noch bei der Funktionsbeschreibung der Verpackung 17 eingegangen.

Die Verpackungsfolie 1 weist weiters einen Separierungsschlitz 15 auf, der zwischen den Materialschwächungszonen 4 und 5 entlang des ersten Randes 2 in einem Abstand gemessen von dem ersten Rand 2, der gleich dem ersten Abstand A1 ist, innerhalb des ersten Siegelbereichs 9A verläuft. Der Separierungsschlitz 15 ist geringfügig länger gehalten als der Abstand zwischen den beiden Materialschwächungszonen 4 und 5 und verläuft parallel zu dem ersten Rand 2. Er überragt somit beidseitig die Materialschwächungszonen 4 und 5 über den zwischen ihnen definierten Öffnungsstreifen 6 hinweg. Auf die Funktion des Separierungsschlitzes 15 sei ebenfalls nachfolgend in der Funktionsbeschreibung der Verpackung 17 eingegangen. An dieser Stelle sei noch festgehalten, dass der Separierungsschlitz 15 auch in einem Abstand gemessen von dem ersten Rand 2 angeordnet sein kann, der größer als der erste Abstand A1 ist. Dies bedeutet, dass der Separierungsschlitz 15 nicht genau am Ende der Materialschwächungszonen 4 und 5 diese Materialschwächungszonen 4 und 5 verbinden muss. Gemessen von dem ersten Rand 2 aus kann er auch weiter innerhalb der Verpackungsfolie 1 liegen, vorausgesetzt er befindet sich noch in dem ersten Siegelbereich, sodass die Dichtheit der Verpackung 17 gewährleistet ist.

Zwischen dem weiteren ersten Schlitz 11, genauer zwischen den Enden der zugeordneten zweiten und dritten Schlitze 12 und 13, und dem Separierungsschlitz 15 sind dritte Materialschwächungszonen 19 und vierte Materialschwächungszonen 20 ausgebildet. Die dritte Materialschwächungszone 19 verläuft zwischen der ersten Materialschwächungszone 4 und dem Endbereich des zweiten Schlitzes 12. Die vierte Materialschwächungszone 20 verläuft zwischen der zweiten Materialschwächungszone 5 und dem Endbereich des dritten Schlitzes 13.

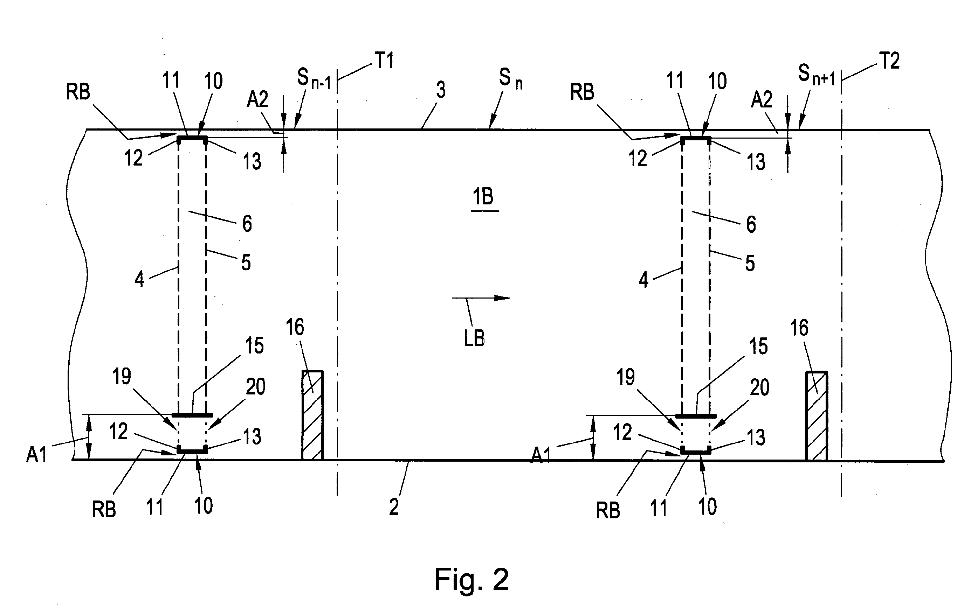

In der Fig. 2 ist die als eine Außenseite 1B der Verpackung 17 bestimmte Seite der Verpackungsfolie 1 abgebildet. Die in der Fig. 1 dargestellte Verpackungsfolie 1 wurde dabei um ihre Längsachse umgeklappt. Die Außenseite 1B besteht im Wesentlichen aus einer Kunststoffschicht. Auf dieser Außenseite 1B sind zwei Drucksteuermarken 16 zu sehen. Ebenfalls zu sehen sind die Öffnungsinitiierungsmittel 10 sowie der Separierungsschlitz 15. Die Materialschwächungszonen 4 und 5 sind gar nicht bzw. nur geringfügig sichtbar (durch unterbrochene Linien angedeutet), da diese auf der als Innenseite 1A der Verpackung 17 bestimmten Seite der Verpackungsfolie 1 erzeugt sind.

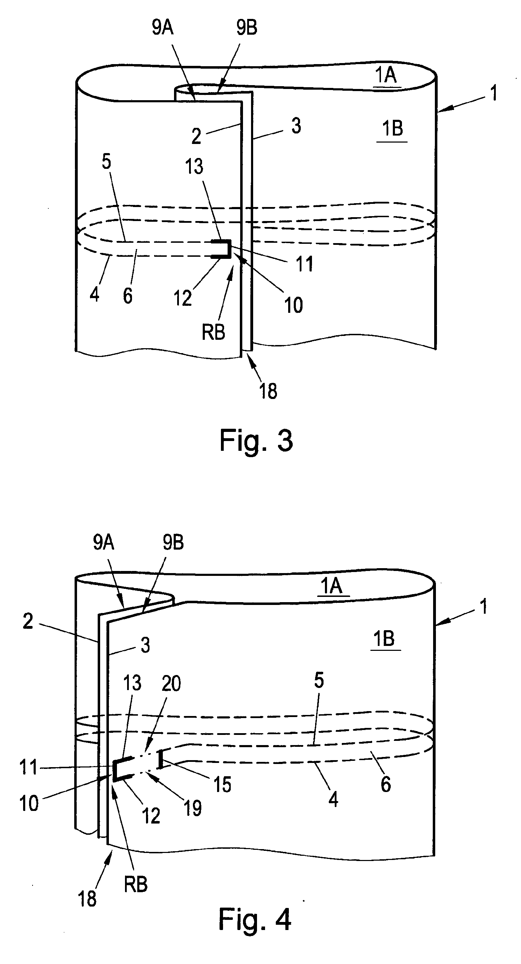

Nachfolgend wird die Verwendung der Verpackungsfolie 1 bei einem erfindungsgemäßen Verfahren zur Herstellung einer erfindungsgemäßen Verpackung 17, so wie in den Figuren 5 bis 7 abgebildet, erörtert. Bei dem Verfahren erfolgt zunächst ein Abrollen der Verpackungsfolie 1 von einer Rolle und ein bahnförmiges Zuführen der Verpackungsfolie 1 zu einer Verpackungsmaschine wie z.B. eine Flowpack-Verpackungsmaschine (nicht dargestellt). So wie dies in den Konzeptdarstellungen gemäß der Fig. 3 und 4 visualisiert ist, wird bei der Verpackungsmaschine eine Längsfinne 18 durch Schlauchbilden der Verpackungsfolie 1 und Versiegeln der Verpackungsfolie 1 entlang der Ränder 2 und 3 in den Siegelbereich 9A und 9B erzeugt.

Die beiden Siegelbereiche 9A und 9B sind aus Gründen der Übersichtlichkeit voneinander getrennt dargestellt, was in der Realität bei versiegelten Siegelbereichen 9A und 9B nicht der Fall ist. Dann sind die Ränder deckungsgleich und je nach Betrachtungsrichtung gemäß Fig. 3 oder Fig. 4 immer nur einer der Ränder 2 oder 3 sichtbar. In der Fig. 3 ist die Längsfinne 18 nach rechts geklappt dargestellt, sodass der zweite Rand 2 oberhalb von dem dritten Rand 3 angeordnet ist. Dies ist die typische Lage der Längsfinne bei einer fertigen Verpackung 17. In der Fig. 4 ist die Längsfinne 18 nach links geklappt dargestellt. Nun ist die Hinterseite der Längsfinne 18 zu sehen, die bei der fertigen Verpackung 17 üblicherweise an der Verpackung 17 anliegt. In dieser Stellung der Längsfinne ist auch der Separierungsschlitz 15 zu sehen.

Die korrespondierend zu dem ersten und dem zweiten Rand 2 bzw. 3 angeordneten Öffnungsinitiierungsmittel 10 sind im vorliegenden Fall beidseitig benachbart zu den Randbereichen RB ausgebildet. Bei dem Erzeugen der Längsfinne 18 werden die beiden Ränder 2 und 3 so ausgerichtet, dass die beiden Öffnungsinitiierungsmittel 10 deckungsgleich in der Längsfinne 18 realisiert sind. Somit sind die Öffnungsinitiierungsmittel 10 frei handhabbar in der Längsfinne 18 integriert, obwohl sie sich nicht an ihren äußeren Rändern 2 und 3 befinden.

Nachfolgend ist eine Öffnungsfunktion der Verpackung mit Hilfe der Figuren 5 bis 7 anhand eines ersten Ausführungsbeispiels einer erfindungsgemäßen Verpackung 17, nämlich einer Verpackung eines Schokoladeriegels, hergestellt aus einer erfindungsgemäßen Verpackungsfolie 1 mit Kaltsiegelkleberpeelbeschichtung gemäß der Fig. 1 bis 2 erörtert.

In der Fig. 5 ist hinsichtlich der Betrachtung der Längsfinne 18 im Wesentlichen die in der Fig. 3 dargestellte Situation visualisiert. Im vorliegenden Fall ist jedoch die Längsfinne 18 vollständig aufgestellt - also von der Verpackung 17 wegragend - dargestellt und die Verpackung 17 von der Seite her betrachtet. In dieser Situation kann die Längsfinne 18 leicht mit einem Finger hintergriffen werden, und die durch die Öffnungsinitiierungsmittel 10 gebildete Lasche aus der Längsfinne 18 nach vorne, also aus der Zeichenebene herausgedrückt werden. Die so herausgedrückte Lasche kann einfach z.B. mit den Fingern der anderen Hand gegriffen werden und der Öffnungsstreifen 6 kann dann umlaufend um die Verpackung 17 aus der Verpackungsfolie 1 vollständig herausgerissen oder zumindest bis zu der Längsfinne 18 herausgerissen werden, sodass die Verpackung 17 nicht in zwei Teile zerfällt.

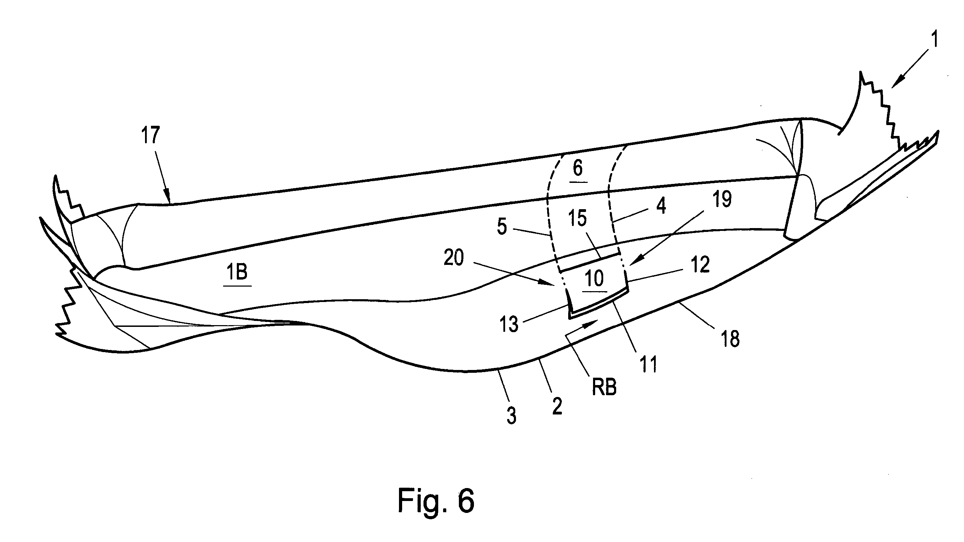

In der Fig. 6 ist hinsichtlich der Betrachtung der Längsfinne 18 im Wesentlichen die in der Fig. 4 dargestellte Situation visualisiert. In Vergleich zu der Fig. 5 wurde die Verpackung 17 jedoch um ihre Längsachse um 180° gedreht. Deutlich zu sehen ist an der Hinterseite der Finne 18, die üblicherweise an die Verpackung 17 angelegt ist, der Separierungsschlitz 15.

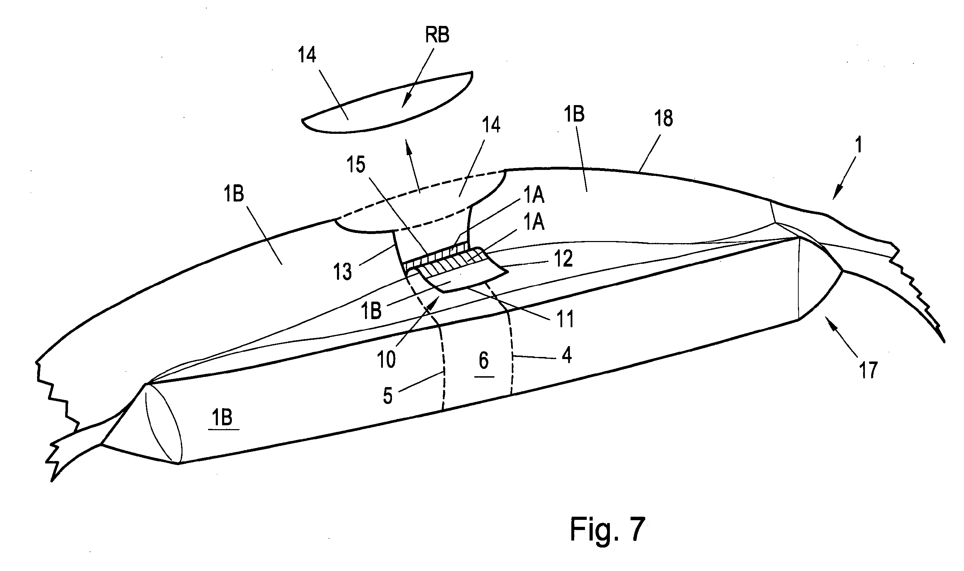

Wird nun die durch die Öffnungsinitiierungsmittel 10 gebildete Lasche wie in der Fig. 7 dargestellt (dies entspricht in etwa der Betrachtung gemäß der Fig. 5) aus der Zeichenebene (entgegen der Blickrichtung) aus der Längsfinne 18 herausgezogen, so setzt sich ein Bruch in der Längsfinne 18 durch die zusammengesiegelten Bereiche der Verpackungsfolie 1 bis zu dem Separierungsschlitz 15 hin fort. Ab dem Separierungsschlitz 15 setzt sich der Bruch nur noch in dem vorderen Teil fort. Dies ist in der Zeichenbebe die obere Lage der Längsfinne 18. Ab dem Separierungsschlitz 15 werden die aneinander gesiegelten Siegelbereiche 9A und 9B nur noch voneinander separiert bzw. voneinander abgeschält. In dem sich voneinander abschälenden Bereich der Längsfinne 18 wird die Innenseite 1A der Verpackungsfolie 1 sichtbar.

Bevorzugt kann die durch die Öffnungsinitiierungsmittel 10 gebildete Lasche auch freigelegt werden, so wie dies in der Fig. 7 dargestellt ist. Zu diesem Zweck wurde der Abrissbereich 14 von der Verpackung 17 abgerissen, was das Greifen der Öffnungsinitiierungsmittel 10 erleichtert.

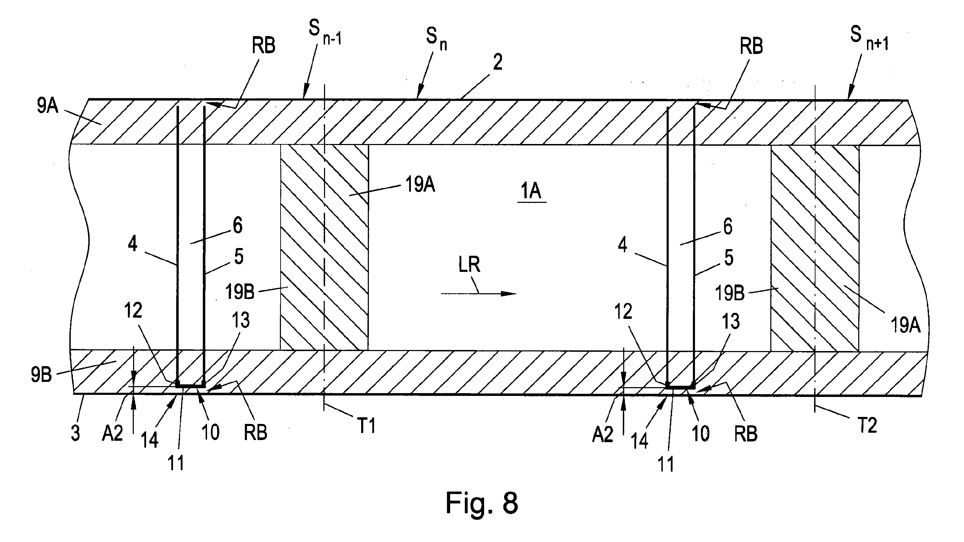

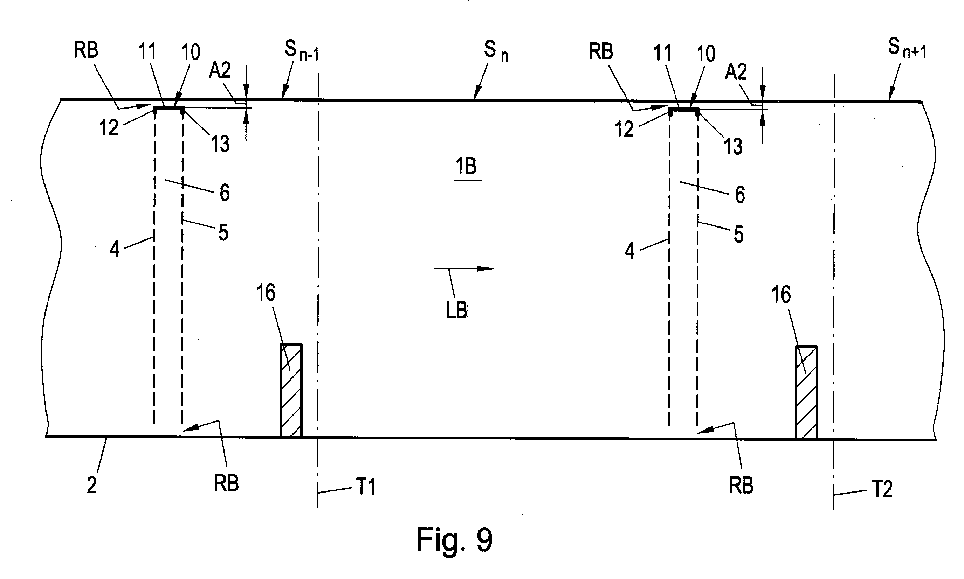

In der Figur 8 und 9 ist ein weiteres Ausführungsbeispiel der Vorpackungsfolie 1 visualisiert. Im vorliegenden Fall sind die Öffnungsinitiierungsmittel 10 nur einseitig ausgebildet. Die beiden Materialschwächungszonen 4 und 5 können im vorliegenden Fall problemlos so nahe an den ersten Rand 2 herangeführt werden, dass der Randbereich RB ausreichend groß ist, um die geforderte Stabilität der Verpackungsfolie 1 zu gewährleisten.

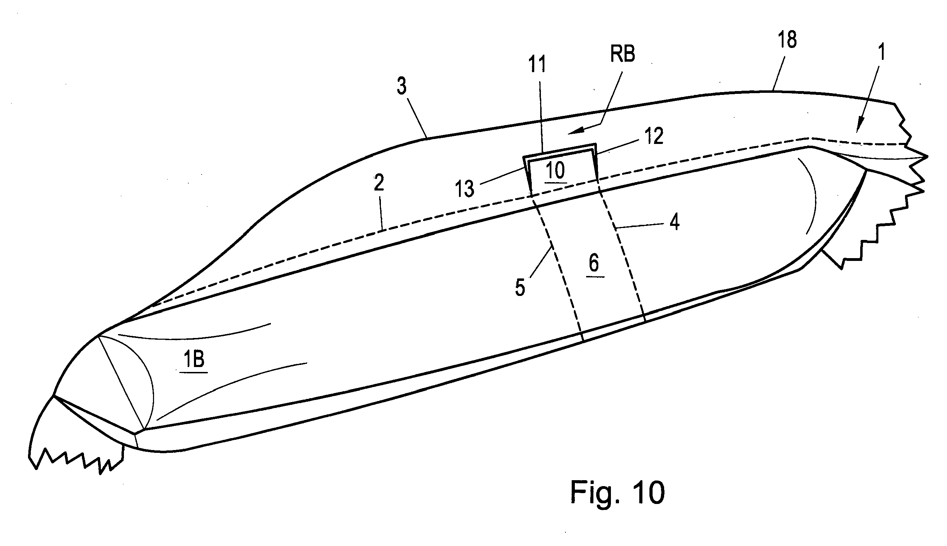

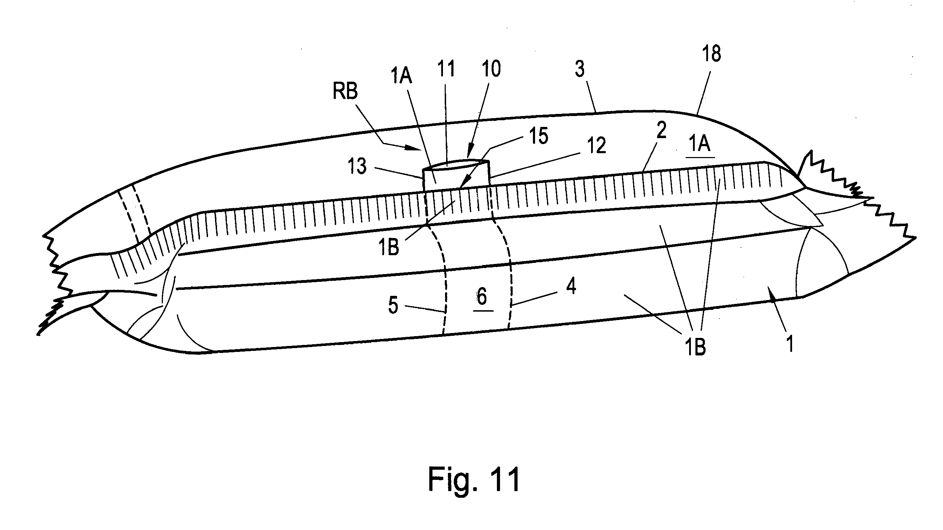

In den Fig. 10 und 11 ist ein zweites Ausführungsbeispiel einer erfindungsgemäßen Verpackung 17 dargestellt, die aus der in den Figuren 8 und 9 abgebildeten Verpackungsfolie 1 gefertigt wurde.

Im vorliegenden Fall werden bei dem Erzeugen der Längsfinne 18 der zweite Rand 3, an dem die Öffnungsinitiierungsmittel 10 ausgebildet sind, und der andere (erste) Rand 2 so ausgerichtet, dass der zweite Rand 3 den ersten Rand 2 in der Längsfinne 18 soweit überragt, dass die Öffnungsinitiierungsmittel 10 oberhalb des ersten Randes 2 lokalisiert sind. Diese Situation ist in der Fig. 11 dargestellt, in der die Hinterseite der Längsfinne 18 ersichtlich ist. Gemäß dieser Ausführungsform ist die Längsfinne 18 nur bereichsweise durch miteinander versiegelte Teile der Verpackungsfolie 1 realisiert. Der verbleibende (unversiegelte) Bereich der Längsfinne 18, der über diesen gemeinsamen Bereich hinwegragt, ist nur einschichtig durch die Verpackungsfolie 1 realisiert, wobei hier die Innenseite 1A der Verpackungsfolie 1 sichtbar ist.

Im vorliegenden Fall kann auch auf den Separierungsschlitz 15 verzichtet werden, da dieser im Wesentlichen virtuell durch den unterhalb der Öffnungsinitiierungsmittel 10 endenden ersten Rand 2 der Verpackungsfolie 1 gebildet ist. Bei einem Anreißen an der durch die Öffnungsinitiierungsmittel 10 gebildeten Lasche aus der Zeichenebene heraus (siehe Fig. 10 - jedoch nicht im Detail dargestellt) setzt sich der Bruch zunächst entlang des Öffnungsstreifens 6 in der Längsfinne 18 in Richtung des doppelschichtig versiegelten Bereichs der Längsfinne 18 fort. Dabei wird der Bruch nur in dem äußeren einschichtigen Bereich der Längsfinne 18 erzeugt. Auch nach Erreichen des zweischichtigen Bereichs der Längsfinne 18 setzt sich der Bruch nur in derselben Schicht der Längsfinne fort, wo er zuvor erzeugt wurde. Ab dem ersten Rand 2 erfolgt jedoch ein Abschälen der miteinander versiegelten Siegelbereiche 9A und 9B, so wie dies in dem vorangehenden Ausführungsbeispiel beschrieben wurde.

Es wird abschließend noch einmal darauf hingewiesen, dass es sich bei der vorhergehend detailliert beschriebenen Verpackung wie bei dem Verfahren zur Herstellung dieser Verpackung als auch bei der Verpackungsfolie lediglich um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Auch können im Zusammenhang mit einem Ausführungsbeispiel offenbarte Merkmale der anderen Ausführungsbeispiele in Kombination mit dort offenbarten Merkmalen zur Anwendung kommen. Auch können die Proportionen der dargestellten Merkmale variieren, ohne dass von dem Konzept der Erfindung abgewichen wird.

### BEZUGSZEICHENLISTE

- 1: Verpackungsfolie
- 1A: Innenseite der Verpackungsfolie
- 1B: Außenseite der Verpackungsfolie
- 2: erster Rand
- 3: zweiter Rand
- 4: erste Materialschwächungszone
- 5: zweite Materialschwächungszone
- 6: Öffnungsstreifen
- 7: dritte Materialschwächungszone
- 8: vierte Materialschwächungszone
- 9A: erster Siegelbereich
- 9B: zweiter Siegelbereich
- 10: Öffnungsinitiierungsmittel
- 11: erster Schlitz
- 12: zweiter Schlitz
- 13: dritter Schlitz
- 14: Abrissbereich
- 15: Separierungsschlitz
- 16: Drucksteuermarken
- 17: Verpackung
- 18: Längsfinne
- RB: Randbereich
- A1: erster Abstand
- A2: zweiter Abstand
- LR: Längsrichtung
- Sn-1, Sn, Sn+1: Segment
- T1, T2: Trennlinie

## Patentansprüche

1. Verpackungsfolie (1) zum Herstellen einer Verpackung (17), wobei die Verpackungsfolie (1) einen ersten Rand (2) und einen zweiten Rand (3) in Längsrichtung (LR) aufweist, und
eine erste Materialschwächungszone (4) und eine zweite Materialschwächungszone (5) aufweist, die sich zwischen dem ersten Rand (2) und dem zweiten Rand (3) erstrecken und zwischen ihnen einen Öffnungsstreifen (6) begrenzen, wobei die Materialschwächungszonen (4, 5) in einem Abstand (A1, A2) zu den Rändern (2, 3) enden, und
einen ersten Siegelbereich (9A) benachbart zu dem ersten Rand (2) und einen zweiten Siegelbereich (9B) benachbart zu dem zweiten Rand (3) aufweist, wobei die Siegelbereiche (9A, 9B) auf jener als Innenseite (1A) der Verpackung (17) bestimmten Seite der Verpackungsfolie (1) lokalisiert sind und sich die Materialschwächungszonen (4, 5) bis in die Siegelbereiche (9A, 9B) erstrecken, und
Öffnungsinitiierungsmittel (10) aufweist, die in einer Entfernung von zumindest einem der Ränder (2, 3) angeordnet sind, wobei ein Randbereich (RB) zwischen dem jeweiligen Rand (2, 3) und den Öffnungsinitiierungsmitteln (10) frei von diesen Öffnungsinitiierungsmitteln (10) ist.

2. Verpackungsfolie (1) nach Anspruch 1, wobei ein erster Abstand (A1) zwischen dem ersten Rand (2), bei dem die Materialschwächungszonen (4, 5) einerseits enden, größer als ein zweiter Abstand (A2) zwischen dem zweiten Rand (3) ist, bei dem die Materialschwächungszonen (4, 5) andererseits enden.

3. Verpackungsfolie (1) nach Ansprüche 1 oder 2, wobei die Öffnungsinitiierungsmittel (10) einen ersten Schlitz (11) aufweisen, der an einer Position korrespondierend zu einem Zwischenraum zwischen den Materialschwächungszonen (4, 5) ausgebildet ist, wobei dieser erste Schlitz (11) benachbart zu dem zweiten Rand (3) mit einer dem zweiten Abstand (A2) entsprechenden Entfernung von dem zweiten Rand (3) lokalisiert ist, oder zusätzlich zu besagtem ersten Schlitz (11) einen weiteren ersten Schlitz (11) an besagter Position aufweisen, wobei der weitere erste Schlitz (11) benachbart zu dem ersten Rand (2) mit einer dem zweiten Abstand entsprechenden Entfernung von dem ersten Rand (2) lokalisiert ist.

4. Verpackungsfolie (1) nach einem der Ansprüche 1 bis 3, wobei die Öffnungsinitiierungsmittel (10) einen zweiten Schlitz (12) und einen dritten Schlitz (13) aufweisen und der erste Schlitz (11) mit dem zweiten Schlitz (12) und dem dritten Schlitz (13) verbunden ist und sich der zweite Schlitz (12) von dem ersten Schlitz (11) weg in Richtung der ersten Materialschwächungszone (4) erstreckt und sich der dritte Schlitz (13) von dem ersten Schlitz (11) weg in Richtung der zweiten Materialschwächungszone (5) erstreckt.

5. Verpackungsfolie (1) nach einem der vorangehenden Ansprüche 1 bis 4, wobei die Öffnungsinitiierungsmittel (10) benachbart zu beiden Rändern (2, 3) ausgebildet sind.

6. Verpackungsfolie (1) nach einem der vorangehenden Ansprüche 1 bis 5, wobei der Randbereich (RB), der frei von den Öffnungsinitiierungsmitteln (10) ist, einen Abrissbereich (14) aufweist.

7. Verpackungsfolie (1) nach einem der vorangehenden Ansprüche 1 bis 6, wobei ein Separierungsschlitz (15) zwischen den Materialschwächungszonen (4, 5) entlang des ersten Randes (2) in einem Abstand gemessen von dem ersten Rand (2), der größer oder gleich dem ersten Abstand (A1) ist, innerhalb des ersten Siegelbereichs (9A) verläuft.

8. Verpackungsfolie (1) nach Anspruch 3 und 7, wobei zwischen dem weiteren ersten Schlitz (11) und dem Separierungsschlitz (15) eine dritte Materialschwächungszone (19) und eine vierte Materialschwächungszone (20) ausgebildet ist, wobei die dritte Materialschwächungszone (19) zwischen der ersten Materialschwächungszone (4) und dem einem Endbereich des weiteren ersten Schlitzes (11) und die vierte Materialschwächungszone (20) zwischen dem anderen Endbereich des weiteren ersten Schlitzes (11) verläuft.

9. Verpackungsfolie (1) nach einem der Ansprüche 7 oder 8, wobei der Separierungsschlitz (15) bis über die erste und die zweite Materialschwächungszone (4, 5) hinaus reicht.

10. Verfahren zur Herstellung einer Verpackung (17) unter Verwendung einer Verpackungsfolie (1) nach einem der Ansprüche 1 bis 9, mit folgenden Verfahrensschritten:
Abrollen und bahnförmiges Zuführen der Verpackungsfolie (1), und Erzeugen einer Längsfinne (18) durch Schlauchbilden der Verpackungsfolie (1) und Versiegeln der Verpackungsfolie (1) entlang der Ränder (2, 3) in den Siegelbereichen (9A, 9B), wobei die in einer Entfernung zu einem der Ränder angeordneten Öffnungsinitiierungsmittel (10) trotz der Existenz des Randbereiches zwischen dem jeweiligen Rand (2, 3) und den Öffnungsinitiierungsmitteln (10), welcher Randbereich frei von diesen Öffnungsinitiierungsmitteln (10) ist, frei handhabbar in der Längsfinne (18) zugänglich sind.

11. Verfahren nach Anspruch 10, wobei bei nur einseitig benachbart zu einem der Ränder (2, 3) ausgebildeten Öffnungsinitiierungsmitteln (10) bei dem Erzeugen der Längsfinne (18) derjenige Rand (3), an dem die Öffnungsinitiierungsmittel (10) ausgebildet sind, und der andere Rand (2) so ausgerichtet werden, dass derjenige Rand (3), an dem die Öffnungsinitiierungsmittel (10) ausgebildet sind, den anderen Rand (2) in der Längsfinne (18) so weit überragt, dass die Öffnungsinitiierungsmittel (10) oberhalb des anderen Randes (2) lokalisiert sind.

12. Verfahren nach Anspruch 10, wobei bei beidseitig benachbart zu beiden Rändern (2, 3) ausgebildeten Öffnungsinitiierungsmitteln (10) bei dem Erzeugen der Längsfinne (18) die beiden Ränder (2, 3) so ausgerichtet werden, dass die beidseitig ausgebildeten Öffnungsinitiierungsmittel (10) deckungsgleich in der Längsfinne (18) lokalisiert sind.

13. Verfahren nach einem der Ansprüche 10 bis 12 aufweisend ein Verschließen der Verpackung (17) durch ein Versiegeln der Verpackungsfolie (1) an einer Kopf- (19) bzw. Fußseite (20) der Verpackung (17) und Trennen der Verpackungsfolie (1) entlang von Trennlinien (T1, T2).

14. Verpackung (17) gefertigt nach einem Verfahren gemäß einem der Ansprüche 10 bis 13 unter Verwendung einer Verpackungsfolie (1) gemäß einem der Ansprüche 1 bis 9.

## Claims

1. A packaging film (1) for manufacturing a package (17), wherein
the packaging film (1) comprises a first edge (2) and a second edge (3) in longitudinal direction (LR),
and a first material weakening zone (4) and a second material weakening zone (5) extending between the first edge (2) and the second edge (3) and limiting an opening strip (6) between them, wherein the material weakening zones (4, 5) end at a distance (A1, A2) from the edges (2, 3), and
a first sealing area (9A) adjacent to the first edge (2) and a second sealing area (9B) adjacent to the second edge (3), wherein the sealing areas (9A, 9B) are located on the side of the packaging film (1) designated to be the inside (1A) of the packaging (17), and the material weakening zones (4, 5) extend as far as into the sealing areas (9A, 9B), and
opening-initiating means (10) arranged at a distance from at least one of the edges (2, 3), wherein an edge area (RB) between the respective edge (2, 3) and the opening-initiating means (10) is free from these opening-initiating means (10).

2. The packaging film (1) according to claim 1, wherein a first distance (A1) between the first edge (2), at which the material weakening zones (4, 5) end on the one hand, is larger than a second distance (A2) between the second edge (3), at which the material weakening zones (4, 5) end on the other hand.

3. The packaging film (1) according to claim 1 or 2, wherein the opening-initiating means (10) comprise a first slot (11) formed at a position corresponding to an intermediate space between the material weakening zones (4, 5), wherein this first slot (11) is located adjacent to the second edge (3) at a distance from the second edge (3) corresponding to the second distance (A2), or wherein the opening-initiating means (10), in addition to the said first slot (11), comprise a further first slot (11) at the said position, wherein the further first slot (11) is located adjacent to the first edge (2) at a distance from the first edge (2) corresponding to the second distance.

4. The packaging film (1) according to one of claims 1 to 3, wherein the opening-initiating means (10) comprise a second slot (12) and a third slot (13), and the first slot (11) is connected with the second slot (12) and the third slot (13), and the second slot (12) extends away from the first slot (11) in direction of the first material weakening zone (4) and the third slot (13) extends away from the first slot (11) in direction of the second material weakening zones (5).

5. The packaging film (1) according to one of claims 1 to 4, wherein the opening-initiating means (10) are formed adjacent to both edges (2, 3).

6. The packaging film (1) according to one of claims 1 to 5, wherein the edge area (RB), which is free from the opening-initiating means (10), comprises a tear-off zone (14).

7. The packaging film (1) according to one of claims 1 to 6, wherein a separating slot (15) extends between the material weakening zones (4, 5) along the first edge (2) at a distance measured from the first edge (2) which is larger than or equal to the first distance (A1) within the first sealing area (9A).

8. The packaging film (1) according to one of claims 3 to 7, wherein a third material weakening zone (19) and a fourth material weakening zone (20) are formed between the further first slot (11) and the separating slot (15), wherein the third material weakening zone (19) extends between the first material weakening zone (4) and the one end area of the further first slot (11) and the fourth material weakening zone (20) extends between the other end area of the further first slot (11).

9. The packaging film (1) according to one of claims 7 or 8, wherein the separating slot (15) extends as far as beyond the first and the second material weakening zones (4, 5).

10. A method for manufacturing a packaging (17) using a packaging film (1) according to one of claims 1 to 9, comprising the following method steps:
unrolling and feeding the packaging film (1) in the manner of a web, and producing a longitudinal fin (18) by forming a tube from the packaging film (1) and sealing the packaging film (1) along the edges (2, 3) in the sealing areas (9A, 9B), wherein the opening-initiating means (10) arranged at a distance from one of the edges, are freely accessible so as to be easily manageable in the longitudinal fin (18), despite the existence of the edge area between the respective edge (2, 3) and the opening-initiating means (10), which edge area is free from these opening-initiating means (10).

11. The method according to claim 10, wherein with opening-initiating means (10) being formed on one side only adjacent to one of the edges (2, 3), the edge (3) on which the opening-initiating means (10) are formed, and the other edge (2) are aligned during producing the longitudinal fin (18) such that the edge (3) on which the opening-initiating means (10) are formed, protrudes beyond the other edge (2) in the longitudinal fin (18) to the extent, where the opening-initiating means (10) are located above the other edge (2).

12. The method according to claim 10, wherein with opening-initiating means (10) being formed on both sides adjacent to both edges (2, 3), the two edges (2, 3) are aligned during producing the longitudinal fin (18) such that the opening-initiating means (10) formed on both sides are located in the longitudinal fin (18) so as to be congruent with each other.

13. The method according to one of claims 10 to 12, comprising closing the packaging (17) by sealing the packaging film (1) at a head end (19) or a foot end (20) of the packaging (17) and separating the packaging film (1) along separating lines (T1, T2).

14. A packaging (17) manufactured according to a method as specified in one of claims 10 to 13 using a packaging film (1) as specified in one of claims 1 to 9.

## Revendications

1. Film d'emballage (1) pour confectionner un emballage (17),
le film d'emballage (1) comportant un premier bord (2) et un deuxième bord (3) en direction longitudinale (LR) et
comportant une première zone d'affaiblissement de matière (4) et une deuxième zone d'affaiblissement de matière (5) qui s'étendent entre le premier bord (2) et le deuxième bord (3) et qui délimitent entre elles une bande d'ouverture (6), les zones d'affaiblissement de matière (4, 5) se terminant avec un écart (A1, A2) par rapport aux bords (2, 3) et
comportant une première zone de scellement (9A) au voisinage du premier bord (2) et une deuxième zone de scellement (9B) au voisinage du deuxième bord (3), les zones de scellement (9A, 9B) étant localisées sur la face du film d'emballage (1) définie en tant que face intérieure (1A) de l'emballage (17) et les zones d'affaiblissement de matière (4, 5) s'étendant jusque dans les zones de scellement (9A, 9B) et
comportant des moyens d'initiation d'ouverture (10) qui sont placés à une distance d'au moins l'un des bords (2, 3), entre le bord (2, 3) concerné et les moyens d'initiation d'ouverture (10), une zone de bord (RB) étant exempte desdits moyens d'initiation d'ouverture (10).

2. Film d'emballage (1) selon la revendication 1, un premier écart (A1) entre le premier bord (2) sur lequel les zones d'affaiblissement de matière (4, 5) se terminent d'une part étant supérieur à un deuxième écart (A2) entre le deuxième bord (3) sur lequel les zones d'affaiblissement de matière (4, 5) se terminent d'autre part.

3. Film d'emballage (1) selon les revendications 1 ou 2, les moyens d'initiation d'ouverture (10) comportant une première encoche (11) qui est conçue en une position correspondant à un espace intermédiaire entre les zones d'affaiblissement de matière (4, 5), ladite première encoche (11) étant localisée au voisinage du deuxième bord (3), à une distance par rapport au deuxième bord (3) correspondant au deuxième écart (A2) ou en supplément de la première encoche (11) citée, comportant une première encoche (11) supplémentaire, à la position citée, la première encoche (11) supplémentaire étant localisée au voisinage du premier bord (2) à une distance par rapport au premier bord (2) qui correspond au deuxième écart.

4. Film d'emballage (1) selon l'une quelconque des revendications 1 à 3, les moyens d'initiation d'ouverture (10) comportant une deuxième encoche (12) et une troisième encoche (13) et la première encoche (11) étant reliée avec la deuxième encoche (12) et la troisième encoche (13) et la deuxième encoche (12) s'éloignant de la première encoche (11) en direction de la première zone d'affaiblissement de matière (4) et la troisième encoche (13) s'éloignant de la première encoche (11) en direction de la deuxième zone d'affaiblissement de matière (5).

5. Film d'emballage (1) selon l'une quelconque des revendications 1 à 4 précédentes, les moyens d'initiation d'ouverture (10) étant conçus au voisinage des deux bords (2, 3).

6. Film d'emballage (1) selon l'une quelconque des revendications 1 à 5 précédentes, la zone marginale (RB) qui est exempte de moyens d'initiation d'ouverture (10) comportant une zone de déchirure (14).

7. Film d'emballage (1) selon l'une quelconque des revendications 1 à 6 précédentes, mesurée entre les zones d'affaiblissement de matière (4, 5) le long du premier bord (2), avec un écart par rapport au premier bord (2) qui est supérieur à l'écart (A1), une encoche de séparation (15) s'étendant à l'intérieur de la première zone de scellement (9A).

8. Film d'emballage (1) selon la revendication 3 et la revendication 7, entre la première encoche (11) supplémentaire et l'encoche de séparation (15) étant conçues une troisième zone d'affaiblissement de matière (19) et une quatrième zone d'affaiblissement de matière (20), la troisième zone d'affaiblissement de matière (19) s'étendant entre la première zone d'affaiblissement de matière (4) et une zone d'extrémité de la première encoche (11) supplémentaire et la quatrième zone d'affaiblissement de matière (20) s'étendant entre l'autre zone d'extrémité de la première encoche (11) supplémentaire.

9. Film d'emballage (1) selon l'une quelconque des revendications 7 ou 8, l'encoche de séparation (15) s'étendant par-delà la première et la deuxième zones d'affaiblissement de matière (4, 5).

10. Procédé de fabrication d'un emballage (17) en utilisant un film d'emballage (1) selon l'une quelconque des revendications 1 à 9, avec les étapes de procédé suivantes :
déroulement et alimentation en forme de lés du film d'emballage (1) et création d'une lame longitudinale (18) par formation d'un tube de film d'emballage (1) et scellement du film d'emballage (1) le long des bords (2, 3) dans les zones de scellement (9A, 9B),
malgré l'existence de la zone de bord entre le bord (2, 3) concerné et les moyens d'initiation d'ouverture (10), ladite zone de bord étant exempte desdits moyens d'initiation d'ouverture (10), les moyens d'initiation d'ouverture (10) placés à une distance par rapport de l'un des bords étant librement manipulables dans la lame longitudinale (18).

11. Procédé selon la revendication 10, lors duquel, dans le cas de moyens d'initiation d'ouverture (10) conçus uniquement au voisinage de l'un des bords (2, 3), lors de la création de la lame longitudinale (18), on aligne le bord (3) sur lequel sont conçus les moyens d'initiation d'ouverture (10) et l'autre bord (2) de telle sorte que le bord (3) sur lequel sont conçus les moyens d'initiation d'ouverture (10) saillisse pardessus l'autre bord (2) dans la lame longitudinale (18) aussi loin que les moyens d'initiation d'ouverture (10) soient localisés au-dessus de l'autre bord (2).

12. Procédé selon la revendication 10, dans le cas de moyens d'initiation d'ouverture (10) conçus de part et d'autre au voisinage des deux bords (2, 3), lors de la création de la lame longitudinale (18), on aligne les deux bords (2, 3) de telle sorte que les moyens d'initiation d'ouverture (10) conçus de part et d'autre soient localisés en coïncidence dans la lame longitudinale (18).

13. Procédé selon l'une quelconque des revendications 10 à 12, comportant une fermeture de l'emballage (17) par un scellement du film d'emballage (1) sur un côté supérieur (19) ou un côté inférieur (20) de l'emballage (17) et un sectionnement du film d'emballage (1) le long de lignes de séparation (T1, T2).

14. Emballage (17) fabriqué d'après un procédé selon l'une quelconque des revendications 10 à 13 en utilisant un film d'emballage (1) selon l'une quelconque des revendications 1 à 9.
